Europäisches Patentamt

European Patent Office

Office européen des brevets

(19)

(11) **EP 0 806 278 B1**

(12) **EUROPEAN PATENT SPECIFICATION**

(45) Date of publication and mention
of the grant of the patent:
**01.09.2004   Bulletin 2004/36**

(51) Int Cl.7: **B29C 45/76**, B29C 45/54

(21) Application number: **96935473.7**

(86) International application number:
**PCT/JP1996/003151**

(22) Date of filing: **28.10.1996**

(87) International publication number:
**WO 1997/015432 (01.05.1997 Gazette 1997/19)**

(54) **METHOD OF PREPLASTICATING INJECTION MOLDING**

VORSCHMELZVERFAHREN BEIM SPRITZGIESSEN

PROCEDE DE MOULAGE PAR INJECTION AVEC PREPLASTIFICATION

(84) Designated Contracting States:
**DE FR GB IT**

(30) Priority: **27.10.1995   JP  28101995**

(43) Date of publication of application:
**12.11.1997   Bulletin 1997/46**

(73) Proprietor: **SODICK CO., LTD.**
**Yokohama-shi, Kanagawa 222 (JP)**

(72) Inventors:
 • **FUJIKAWA, Misao**
   **Kaga-shi, Ishikawa 922-05 (JP)**
 • **OTOWA, Hirotsugu**
   **Kaga-shi, Ishikawa 922-05 (JP)**

(74) Representative: **Kensett, John Hinton et al**
   **Saunders & Dolleymore,**
   **9 Rickmansworth Road**
   **Watford, Hertfordshire WD18 0JU (GB)**

(56) References cited:
   EP-A- 0 672 512          WO-A-86/06321
   JP-A- 3 097 517          JP-A- 3 097 518
   JP-A- 6 170 900          US-A- 4 632 651
   US-A- 4 752 201          US-A- 5 238 147

 • PATENT ABSTRACTS OF JAPAN vol. 015, no.
   422 (M-1173), 25 October 1991 (1991-10-25) & JP
   03 178417 A (NIIGATA ENG CO LTD), 2 August
   1991 (1991-08-02)
 • PATENT ABSTRACTS OF JAPAN vol. 014, no.
   393 (M-1015), 24 August 1990 (1990-08-24) & JP
   02 147312 A (MATSUSHITA ELECTRIC IND CO
   LTD), 6 June 1990 (1990-06-06)

## Description

## Technological Field

This invention relates to the injection method of the preplasticization type injection molding machine, more specifically, to the injection method of the preplasticization type injection molding machine that feeds the molten resin which has been plasticized in the plasticization chamber to the injection chamber where the molten resin is metered, and injects the molten resin in the injection chamber with a plunger.

## Technological Background

There is a field in which precision molded parts are manufactured by means of injection molding. In this field, it is essential requirement that the geometry of the mold die cavities be exactly transferred to the molded parts, and the physical properties of the material be stable. For this purpose, it is required that not only the molding resin material be plasticized (or molten) stably in terms of physical property but also the molten resin be accurately measured, ie metered by predetermined volume, and the filling volume be accurately controlled, preventing the cushion amount (for replenishing the contraction of the molded parts upon cooling by storing some molten resin in the tip of the injection chamber under high pressure shortly after filling) from varying when maintaining the pressure.

Performing this type of injection molding with the preplasticization type injection molding machine by which the synthetic resin material is plasticized in the plasticization chamber and is injected from the injection chamber has the advantage that no leak of the molten resin takes place except for a minute amount of the resin from between the plunger and the injection cylinder, resulting in little variation in filling volume. The reason is that injection is done by the plunger which is not equipped with a check valve. Therefore, in every injection shot, a variation in cushion amount can be minimized to the lesser degree, as long as the molten resin is substantially accurately metered.

Therefore, the applicant has disclosed the following technology under Toku-Kai-Hei 6-170900 Patent Gazette, the features of which are disclosed in the preamble of the appended claim 1. It is injection molding by the screw preplasticization type injection molding machine. After the metering process is completed, the plasticization screw is moved forward to close (hereinafter referred to as "to block") the connection passage between the plasticization chamber and the injection chamber, followed by injection. Since this blocking is done by moving the screw forward, the molten resin in the injection chamber increases slightly in amount. Then, this increment, or change in position (hereinafter referred to as "position movement caused by blocking") from the position of the plunger when the completion of metering is detected (hereinafter referred to as " metering detection position") to the position of the plunger moved backward by means of said blocking operation, is calculated and the metering detection position at which the metering is completed in the next metering is corrected and canceled by the position movement caused by blocking. For a short-term period, the resin material is almost continuously plasticized in every molding shot, and therefore, the physical properties of the molten resin do not vary in every molding shot. On the other hand, in continuous operation for a longer period of time, this may gradually vary. In this case, said position movement caused by blocking will gradually vary. Therefore the metering detection position corrected by this position movement caused by blocking enables to be metered with little variation.

However, the molten resin fed to the injection chamber may contain a small amount of resin-dissolved gas as bubbles remaining without being expelled at the time of plasticization. This presence of the bubbles in the molten resin caused the density of the molten resin to vary, leading to a slight variation in the volume of the resin metered The reason is that, for improved plasticization efficiency, the pressure acting on the molten resin in the injection chamber (which is controlled by the back-pressure acting on the plunger) is lower than that in the plasticization chamber, and therefore the bubbles may appear in the injection chamber. Furthermore, since the molten resin with varied density is incrementally filled by predetermined stroke by the plunger with no leak or reverse flow, the actual filling amount slightly varies. As a result, the cushion amount varied slightly.

On the other hand, in applications where the molding items are thin-wall precision molding parts, the following difficulties in terms of molding control were accompanied. For filling control, the conventional technology is adapted in which the plunger speed (filling speed) is predetermined in accordance with the plunger position, and during filling operation, control is performed on the basis of the plunger position giving priority to the speed. For this reason, the pressure during filling operation is generated as a result of the filling speed, and may vary depending on the physical properties of the molten resin, especially the viscosity and density. Furthermore, the pressure at the point of completion of filling operation, that is generated when the process switches from the filling operation to the pressure maintaining control (hereinafter referred to as "V-P switch point"), is slightly affected by the variation in the total amount of the molten resin compressed at the V-P switch point, in other words, by the sum of the molded parts, spools, runners, and cushion. For molding thin-wall precision molding parts, the geometry precision and the physical properties of this type of molding parts are affected by the pressure at the time when solidification starts to take place. This is because solidification starts immediately after the molten resin is filled in the mould die cavities.Therefore when the metered volume or filled amount substantially varies, the pressure at the time of completion of filling operation also varies, and the geometric precision and the physical properties of the thin-wall precision molding parts are affected.

**Disclosure of the Invention**

According to the present invention, there is provided an injection method of the preplasticization type injection molding machine, as disclosed in the characterising part at appended claim 1.

This preliminary compression of the molten resin makes the density of the molten resin equal to the original density of the molten resin. Therefore metering the plunger position as preliminary compression position at the time when it is preliminarily compressed makes it possible to measure the actual metering volume which is not influenced by density. The metering detection position is corrected so as to be cancelled by the position movement caused by the preliminary compression including the previous effect caused by a difference in density, and therefore, the volume of the molten resin when blocked and preliminarily compressed nearly agrees with the set desired metering volume without being affected by the volume of dissolved gas. Thus, the accurately metered molten resin is filled on the basis of the preliminary compression position resulting from the substantially accurately metered volume of the molten resin, and little or no variation is filled amount takes place. As a result, little or no variation in cushion amount for maintaining pressure takes place, and the filling completion pressure becomes the desired level with little variation.

Furthermore, in the embodiment according to claim 2 the invention includes:

a process in which the blocking position to which said plunger has moved during said blocking process is measured; and
a metering position correction process in which the next metering detection position is corrected by the position movement caused by blocking from said metering detection position is corrected by the position movement caused by blocking from said metering detection position to said blocking position in place of the correction process of the metering detection position corrected by the position movement resulting from said preliminary compression.

This allows the metering detection position to be corrected in such a way that the metering reference position is cancelled by said position movement caused by blocking of the previous molding shot, enabling the volume of the molten resin to be in agreement with the set amount of metering under the blocking state and allowing the molten resin to be filled on the basis of the preliminary compression position based on the substantially accurately measured volume of the molten resin, with almost little variation in filled volume. As a result, little variation in cushion amount is accompanied, and the filling completion pressure agrees nearly with the desired pressure.

Furthermore, in the embodiment according to claim 3 the invention includes a process of suck-back (which is to momentarily decrease the pressure in the injection chamber to prevent the molten resin from leaking out of the injection nozzle) the molten resin from leaking out of the injection nozzle) which is performed just before the mold die opens, and in the injection process the filling control is performed on the basis of said preliminary compression position.

This prevents drooling (which is a leak of the resin out of the tip of the injection nozzle) without for the injection nozzle being provided with a valve for opening and closing the injection hole, and also enables an accurate filling control to be performed on the basis of the substantially accurately measured preliminary compression position.

**Brief Description of the Figures**

Figure 1 is a block diagram typically indicating the plasticization device and the injection device of a preplasticization type injection molding machine in the first embodiment of this invention, and its related control equipment.

Figure 2 is a flow chart indicating the control procedure of the first embodiment.

Figure 3 is a description drawing indicating the process in which the metering detection position shifts at every metering by correction of the metering detection position of the first embodiment.

Figure 4 is a flow chart indicating the control procedure of the second embodiment of this invention.

Figure 5 is a description drawing indicating the process in which the metering detection position shifts every metering by correction of the metering detection position of the second embodiment.

**Preferred Embodiments of the Invention**

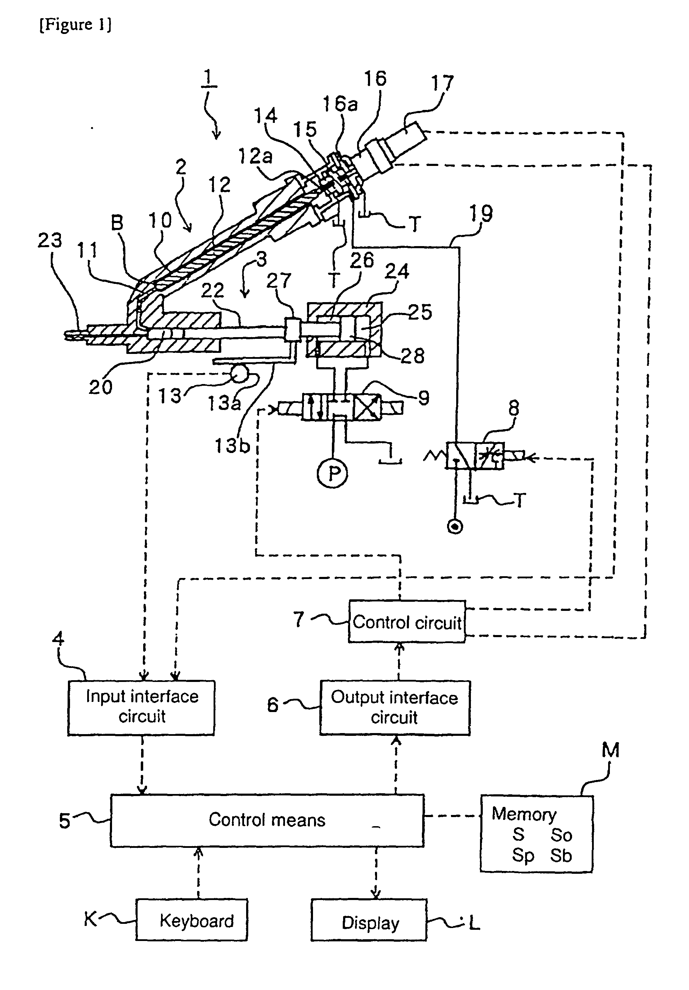

As shown in Fig. 1, a preplasticization type injection molding machine 1 consists of a plasticization device 2 and an injection device 3. A plasticization chamber 10 formed in the cylinder of the plasticization device 2 and an injection chamber 20 formed in the cylinder of the injection device 3 are connected via a connection passage 11. Inside the plasticization chamber 10 is provided a screw 12 rotatably and movably in both forward and backward directions. Inside the injection chamber 20 is provided a plunger 22 movably in both forward and backward directions. The end of the screw 12 forms a shaft 12a made on the spline shaft, and the shaft 12a is inserted into the spline groove on a piston 15 housed in a hydraulic cylinder 14. Furthermore, the circumference of an output shaft 16a of the motor 16 forms also a spline shaft, the output shaft 16a being inserted into the spline groove formed on the opposite side of said piston 15.

Thus, when a motor 16 runs, the piston 15 rotates via said spline groove to cause the screw 12 to rotate, causing the resin material to be plasticized. Here, the rotating speed of the motor 15 is detected through a rotation detection means 17 such as a rotary encoder. On the other hand, the piston 15 housed in said hydraulic cylinder 14 pushes said shaft 12a by means of the operating fluid, which is supplied from a hydraulic supply source such as an oil pump via a directional control valve 8 and a piping line 19, to move said screw 12 forward. Thus, the connection passage 11 is closed, or blocking takes place. By switching the directional control valve 8 to open the oil chamber for the hydraulic cylinder which leads to the piping line 19 to the tank T, the screw can move backward, venting the connection passage 11 at the time of plasticization by means of the reaction force of the molten resin fed forward at the time of plasticization.

To an injection chamber 20 is connected an injection nozzle 23 at its tip, and the molten resin is injected to the mold die cavity not indicated in the figure through the injection nozzle 23. The plunger 22 provided in the injection cylinder so as to freely move both forward and backward is connected via a coupling 27 to a piston 28 located its rear inside the hydraulic cylinder 24. The piston 28 moves the plunger 22 forward and backward by supplying the hydraulic fluid to the forward movement oil chamber 25 and the backward movement oil chamber 26, respectively. The position of the plunger 22 is detected by a measuring means 13 such as a rotary encoder as the moved position of a rack 13b mounted on the coupling 27, and its detection signal is input to a microcomputer control means 5, which is a control means, through an input interface circuit 4.

The microcomputer control means 5 is equipped at least with a keyboard K for inputting the injection control conditions such as the detering reference position S to be mentioned later, a display L for displaying the control state of injection and die clamping, and a memory M for storing the measured position of the plunger 22. Furthermore, the microcomputer control means 5 controls the motor 16 via an output interface 6 and control circuit 7 in accordance with the plasticization conditions, and controls blocking and release of the screw 12 by switching the directional control valve 8. Furthermore, the microcomputer control means 5 performs back-pressure control in the metering process, filling control in the injection process, and pressure maintaining control by controlling an electromagnetic proportional flow control valve not indicated in the figure, or flow control valve such as a servo valve and the directional control valve 9.

The screw preplasticization type injection molding machine described so far is an embodiment of the block method. However, the control of this invention applies to the method in which the screw whose tip diameter is larger moves backward to block, or a publicly know method which has a rotary type ball valve. The drive for the plasticization device and the injection device may be either an electric or hydraulic type. The preliminary plasticization device is not limited to a screw preplasticization type having both a torpedo and a plunger. The die clamping device may be any conventional, publicly know one; detailed description is omitted.

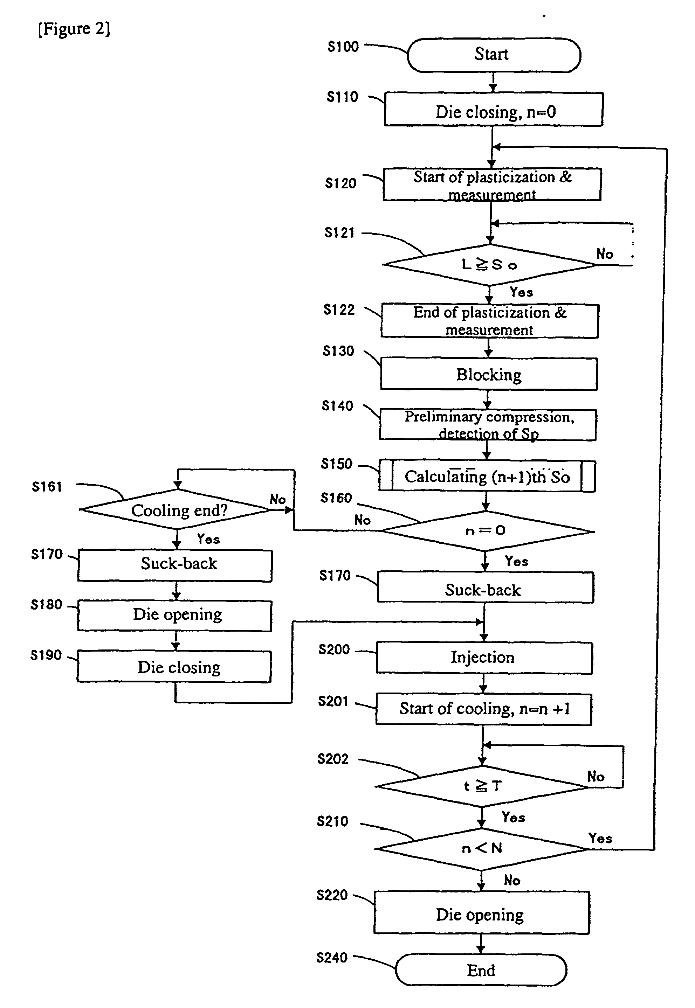

In the above-mentioned arrangement, the operation process of the first embodiment will be described based on Fig. 2 Flow Chart.

First, the die clamping device not indicated in the figure is closed, and the die is clamped (S110). Then, variable n for counting the number of molding cycles is 0. The synthetic resin material fed to the plasticization chamber 10 from the hopper not indicated in the figure is heated by a heating device not indicated in the figure, and plasticized while being compressed, stirred, and heated by rotation of the screw 12. Next, the molten resin is supplied to the injection chamber 20 through the connection passage 11 to start metering operation (S120). Then, the screw 12 moves backward (upward) by means of the reaction force generated when the molten resin is supplied forward, forming a gap B (approximately 1 mm) in the front end of the screw 12, which allows the molten resin material to be supplied to the injection chamber 20 through the connection passage 11. When the molten resin passes through this gap, flow resistance is generated, causing the pressure of the molten resin in the plasticization chamber 10 to reach the pressure adequate for plasticization. Under this pressure, the resin material is plasticized while air and dissolved gas are being expelled. At this time, a slight back-pressure is applied to the molten resin in the injection chamber 20; however, this pressure is lower than that in the plasticization chamber 10 in order to improve the plasticization efficiency. Thus, the back-pressure in the injection chamber 20 is not higher, and therefore, if the plasticization conditions change gradually during the operation for a long period of time, the dissolved gas in the molten resin may collect to air bubbles, with a variation in the density of the molten resin.

Plasticization and metering take place continually in such a manner, causing the plunger 22 to move backward. When the plunger position L becomes greater than the metering detection position So (S121), the screw 12 stops rotating to complete metering (S122). Next, the screw 12 is moved forward to block the connection passage 11 (S130). Then, the molten resin staying in said gap B is pushed into the injection chamber 20, causing the plunger 22 to move backward by that amount.

Next, the hydraulic oil is added to said forward movement oil chamber 25 to apply the thrust to the plunger 22, compressing the molten resin preliminarily to the desired pressure (S140). The pressure to be applied in the preliminary compression process is in the order of 100 to 1,000 kg/cm2, which is set according to the resin material to be used. The position at which the plunger stops after completion of preliminary compression is measured as a preliminary compression position Sp, which is newly stored. This makes it possible to accurately meter the substantial volume of the molten resin material without being affected by the volume of the dissolved gas. This is because the bubbles of the dissolved gas is compressed to a negligibly small volume, leading the density of the molten resin to the original density of the resin. In addition, this can totally uniform the density of the molten resin staying in the injection chamber. As a means of judging how long the preliminary compression continues, there are some means: one to continue for the time set by a timer, other to detect the acceleration of the moving speed of the plunger during the preliminary compression and to discontinue when this becomes zero or minus.

Next, the metering position is corrected (S150) in order to calculate the metering detection position So of the next molding shot; this being described later.

Next, whether or not the molten resin is previously injected is judged by whether the variable n of the number of molding cycles is 0 or not (S160). For the first shot, n = 0, and then the process moves to the next suck-back step (S170). For the second and subsequent molding shots, injection was performed previously, and thus judgment is made by knowing that the cooling time of the molded parts has elapsed or not (S161). After elapsed, the process performs a suck-back step (S170), the publicly know die opening and molded parts ejection are performed (S180), and then die closing and clamping are performed (S190).

With the injection molding machine in which the plunger is used to inject the molten resin, no leak or back flow of the molten resin takes place when the suck-back operation is performed. This is because the connection passage 11 is blocked and the check valve which is conventionally used an inline screw type molding machine is not used in the plunger. Therefore, if the position of the plunger 22 shifts by suck-back operation, the significance of the preliminary compression position Sp at which the volume of the molten resin is substantially accurately measured remains unchanged. For the filling control to be described later, the filling control starts on the basis of the position at which the plunger reaches said preliminary compression position Sp, and the plunger moves forward incrementally from this point by predetermined amount of stroke. Here the plasticization machine is not limited to the screw plasticization type, and suck-back operation may be performed in the same manner if the connection passage can be blocked.

Then, the injection process, or the filling control and pressure maintaining control to be described later, takes place (S200), and the cooling operation starts (S201). At this point of time, 1 is added to the variable n of the number of molding cycles. The next plasticization waits until the pre-set time T has elapsed (S202), and then whether or not molding is continued is judged (S210). This judgment is performed by comparing the variable n with the planned number of molding cycles N. Since the molding operation normally continues further, plasticization and metering re-start (S120). However, if it is the last shot, the die opens after the cooling process completes, ejecting the molded parts to terminate the operation (S220).

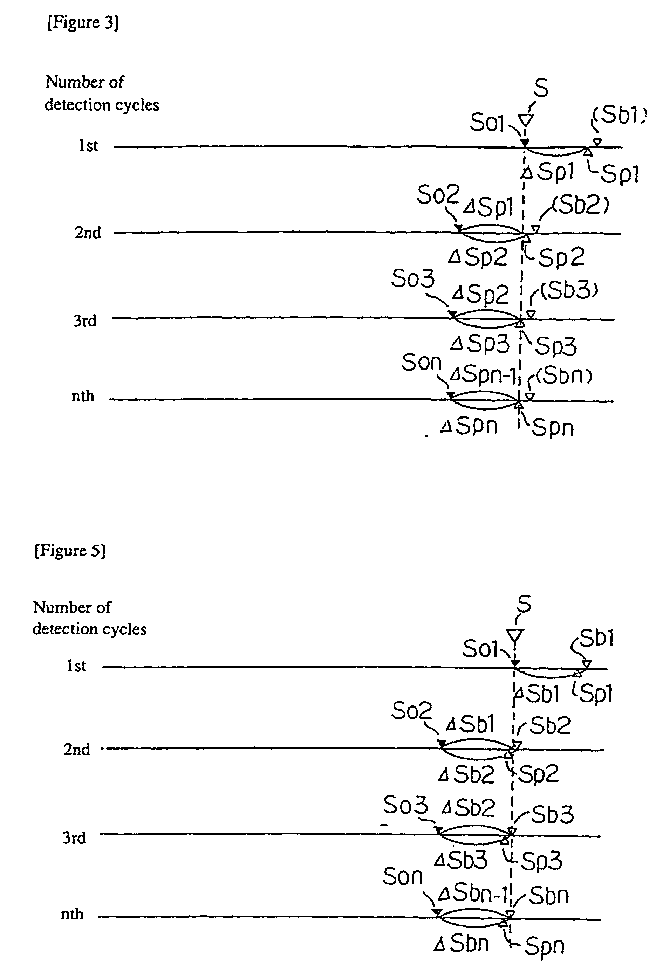

In the first embodiment, the correction of the metering detection position is performed as follows (S150): The state under which the metering detection position So is corrected in every molding shot is typically indicated in Fig. 3. For the sake of description, each position data for the first, the second, ......., the nth molding shot, the suffixes 1, 2, ...... n are given.

First, the first metering is performed until the plunger reaches the metering detection position $SO1 = S$ (S121 and S122). Here, S is the metering reference position, which is a set amount of the metering volume by summing the filling volume of the molded parts, the volume of the spool and the runner, and the cushion amount necessary for maintaining the pressure. Next, blocking operation starts (S130), causing the plunger to move backward to the block position Sb1. It should be noted, however, that the block position Sb1 is used only for description purpose, and is not detected in the first embodiment. Then, the preliminary compression takes place (S140) to compress the molten resin, which causes the plunger to slightly move forward to the position Sp1. Then, the preliminary compression position Sp1 is the position to which the plunger has moved backward by $\Delta$ Sp1 from the metering detection position So1. Subsequently, the filling operation is performed on the basis of this preliminary compression position Sp1 (S200).

Thus, the microcomputer control means 5 uses said preliminary compression position Sp1 detected in the first molding, the set metering reference position S, and calculated metering detection position So1 to calculate the second metering detection position So2 from the following equation.

$$So2 = S - (Sp1 - So1) \qquad \text{Eq. (1)}$$

Then, the stored value of the metering detection position So is renewed to So2 to complete the correction of the first metering position. Here, the position movement $\Delta$ Sp1 caused by the preliminary compression process can be calculated from the following equation.

$$\Delta Sp1 = Sp1 - So1 \qquad \text{Eq. (2)}$$

It is the position movement by which the position of the plunger moves from the metering detection position So1 and further reaches the preliminary compression position Sp1 during the blocking process and the preliminary compression process.

According to Eq. (1), the second metering detection position movement △ Sp1 caused by the preliminary compression process from the metering reference position S. Then, the second metering continues until the above-mentioned second metering detection position So2 is reached, and blocking and preliminary compression take place in succession. Here, the position movement △ Sp2 caused by the preliminary compression process is almost the same as that of the first operation, since the operation follows the previous operation. Therefore, the position of the plunger after it is blocked in the second molding shot and preliminarily compressed is in near agreement with the metering reference position S. Likewise, the third and subsequent metering detection positions So3, So4, and so on are processed in the same manner.

As described above, the microcomputer control means 5 uses the stored (n-1)th preliminary compression position Spn-1, the metering detection position Son-1, and the metering reference position S in the (n-1)th molding shot, to calculate the metering detection position Son in the nth molding cycle from the following equation.

$$Son = S - (Spn-1 - Son -1) \qquad Eq. (3)$$

The nth molding shot is performed taking Son as the metering detection position. Here, the position movement △ Spn-1 caused by the preliminary compression process results in the following:

$$\triangle Spn-1 = Spn-1 - Son-1 \qquad Eq. (4)$$

The metering. detection position So is, as seen from the above, corrected so as to be canceled by the position movement △ Sp caused by the previous preliminary compression process. This position movement △ Sp caused by the previous preliminary compression process varies much when the molten resin contains much dissolved gas with lower density, and varies less when the density is higher. When these are compared in every shot, they are the same for every time for a short period of time; they gradually varies during a long period of time. Therefore, when the metering is completed at the corrected metering detection position So as seen from the above and the preliminary compression is performed after blocking, the volume of the molten resin eliminates the effect of the volume of the dissolved gas, and nearly agrees with the desired set metering volume which is represented by the metering. reference position S. This is because it is seldom in normal molding operation that the density of the molten resin abruptly varies. Even in the case that the plasticization state gradually varies during a longer period of operation, the metering detection position So is corrected as seen above, and thus it is possible to bring the volume of the metered molten resin material in an exact agreement with the measurement reference position S.

Next, the filling control (S200) during the injection process is described. The filling control giving a priority to the speed control on the basis of the position of the plunger is the same as that of the conventional technology. In this invention, however, the volume of the molten resin under the preliminary compression nearly agrees with the volume set by the metering reference position S since the above-described metering detection position So is corrected as seen above, and the density of the molten resin is totally uniformed. Furthermore, the filling control, the accurate filling inherent in injection by means of a plunger, is started on the basis of the preliminary compression position Sp and the plunger is incrementally moved forward from this position Sp and the plunger is incrementally moved forward from this position by predetermined stroke, and thus the cushion amount after filling as well as the filling amount scarcely vary in every molding shot. In addition, the pressure at the before-mentioned V-P switch point at the time when the filling operation completes scarcely vary. Thus, the first embodiment is an adequate injection method for thin-wall precision parts.

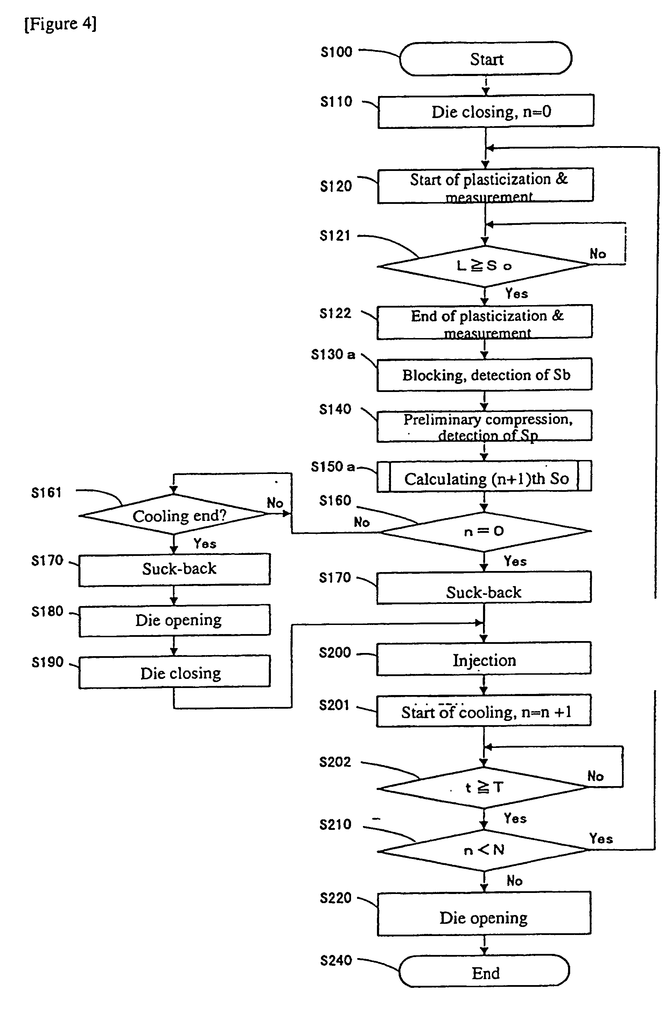

Next, the metering position correction (S150a) and filling control (S200) in the second embodiment will be described based on Fig. 4, Flow Chart. Compared to the Flow Chart of the first embodiment, S130a and S150a alone differ, and thus the description is focused on these steps. The state how the metering detection position So is corrected in every molding shot is typically indicated in Fig. 5.

First, the first metering is performed until the plunger reaches the metering detection position So1 = S (S121 and S122). The metering reference position S is the same as that of the first embodiment. Next, blocking starts, and the position to which the plunger moves backward is detected as the block position Sb1 (S130a). The block position Sb1 is the position to which the plunger moves backward from the metering detection position So1 by △ Sb1. Then, the preliminary compression takes place (S140) to compress the molten resin, which causes the plunger to slightly move forward, and this position is detected as the preliminary compression position Sp1. Subsequently, the filling operation is performed on the basis of this preliminary compression position Sp1 (S200).

Thus, the microcomputer control means 5 uses said blocking position Sb1 detected in the first molding, the set metering reference position S, and calculated metering detection position So1 to calculate the second metering detection position So2 from the following equation.

$$So2 = S - (Sb1 - So1) \qquad Eq. (5)$$

Then, the stored value of the metering detection position So is renewed to So2 to complete the correction of the first metering position. Here, the position movement $\Delta$ Sb1 caused by the blocking process can be calculated from the following equation.

$$\Delta\,\mathrm{Sb1} = \mathrm{Sb1} - \mathrm{So1} \qquad \text{Eq. (6)}$$

It is the position movement by which the position of the plunger moves from the metering detection position So1 during the blocking process.

According to Eq. (5), the second metering detection position So2 is smaller than the metering reference position S by position movement caused by $\Delta$ Sb. Then, the second metering continues until the above-mentioned second metering detection position So2 is reached, and blocking takes place in succession. Here, the position movement $\Delta$ Sb caused by blocking is almost the same as that of the first operation. Therefore, the position of the plunger after it is blocked in the second molding shot is in near agreement with the metering reference position S. Likewise, the third and subsequent metering detection positions So3, So4, and so on are recalculated and newly stored.

As described above, the microcomputer control means 5 uses the stored (n-1)th blocking position Sbn-1, the metering detection position Son-1, and the metering reference position S in the (n-1)th molding shot, to calculate the metering detection position Son in the nth molding cycle from the following equation.

$$\mathrm{Son} = \mathrm{S} - (\mathrm{Sbn}\text{-}1 - \mathrm{S}\text{-}1) \qquad \text{Eq. (7)}$$

The nth molding shot is performed taking Son as the metering detection position. Here, the position movement $\Delta$ Sbn-1 caused by the blocking process results in the following:

$$\Delta\,\mathrm{Sbn}\text{-}1 = \mathrm{Sbn}\text{-}1 - \mathrm{Son}\text{-}1 \qquad \text{Eq. (8)}$$

When the physical properties of the molten resin vary, the blocking position Sb varies with variation in physical property, and thus the position movement $\Delta$ Sb caused by blocking varies accordingly. In this case, the metering detection position So is corrected by the position movement $\Delta$ Sb caused by the previous blocking operation. Therefore the volume of the molten resin, which is blocked after the metering is completed at this metering detection position So, nearly agrees outwardly with the volume represented by the metering reference position S. Further, since the density of the molten resin is uniformed to the original density of the molten resin by the preliminary compression, the volume of the molten resin can accurately be measured. Since the molten resin whose density has been uniformed is filled on the basis of the preliminary compression position Sp, the volume of filled molten resin is constant, with little or no variation in cushion amount. As a result, the pressure at the before-mentioned V-P switch point scarcely varies when the filling operation is completed. Thus, the second embodiment is an adequate injection method for thin-wall precision parts. In the case of this embodiment, the preliminary compression position Sp causes a slight deviation from the measurement reference position Sp. However, unless the plasticizataion state is unstable, this deviation is nearly constant, and the second embodiment provides the same effect as that of the first embodiment.

The blocking mentioned in both 1st embodiment and 2nd embodiment is described as a blocking method in which the screw is moved forward to block the connection passage. However it should be noted that the metering detection position can be corrected in the same manner even with the method in which the screw moves backward to close the connection passage or with the method in which the connection passage is closed by a rotary type ball valve. With the former method, the molten resin in the injection chamber is pulled back toward the plasticization chamber, and thus the blocking position Sb is in the advance position than the metering detection position So. As a result, the before-described position movement $\Delta$ Sb caused by blocking from the metering reference position S. Next, when the molten resin is measured on the basis of this metering detection position So, it goes without saying that the blocking position Sb agrees nearly with the metering reference position S. With the latter method, since the position of the plunger is not varied by blocking, the position movement $\Delta$ Sb only becomes 0.

## Claims

1. An injection method of the preplasticization type injection molding machine (1), having a plasticization chamber (10) where the synthetic resin material is plasticized, an injection chamber (20) where said molten synthetic resin material is metered and injected, a plunger (22) mounted in said injection chamber (20) so as to move forward and backward, and a connection passage (11) connecting said plasticization chamber (10) and injection chamber (20), including;

   a metering process in which the resin material plasticized in said plasticization chamber (10) is fed to said injection chamber (20) through said connection passage (11) causing the plunger (22) to move backwards to a metering reference position (S), whereby metering terminates;
   a blocking process that closes said connection passage (11) and an injection process in which the filling control is performed on the basis of said metering reference position (S), **characterised in that** said metering process further comprises;

a preliminary compression process in which the molten resin in the injection chamber (20) is compressed to a predetermined pressure by said plunger (22) moving after blocking and before injection,

a preliminary compression position detection process in which the position (Sp) of said plunger (22) is detected after said preliminary compression process,

an injection process in which the filling control is performed on the basis of said preliminary compression position (Sp) instead of said metering reference position (S), and

a metering position correction process in which said metering reference position (S) is calculated as a metering detection position (So) in such a way that the subsequent metering reference position (S) in each moulding cycle is corrected by the preceding position movement caused by said blocking process and the preliminary compression process from the last metering detection position (So), whereby the first metering detection position (So) is equal to said metering reference position (S):

2. The injection method of the preplasticization type injection molding machine as set forth in Claim 1 including;

a blocking position detection process that detects the position (Sb) of said plunger (22) after said blocking process, and

a metering position correction process in which said metering reference position (S) is calculated as a metering detection position (So) in such a way that the next metering reference position (S) is corrected in every molding cycle by last position movement caused by said blocking process from the last metering detection position (So) whereby the first metering detection position (So) is equal to said metering reference position (S),

a metering position correction process that corrects the next metering detection position (So) by the position movement caused by blocking from said metering detection position (So) to said blocking position (Sb) in place of the metering position correction process that corrects the next metering detection position (So) by the position movement caused by said preliminary compression.

3. The injection method of the preplasticization type injection molding machine as set forth in Claim 1 or 2 including;

an injection process in which a suck-back process is added before said injection process, and an injection is controlled on the basis of said preliminary compression position (Sp).

**Patentansprüche**

1. Einspritzverfahren für eine Spritzgussmaschine (1) des Vorplastifizierungstyps, die eine Plastifizierungskammer (10), in der eine Kunstharzmasse plastifiziert wird, eine Einspritzkammer (20), in der die geschmolzene Kunstharzmasse zugemessen und eingespritzt wird, einen Kolben (22), der in der Einspritzkammer (20) so angebracht ist, dass er sich vorwärts und rückwärts bewegen kann, und die einen Verbindungskanal (11) einschließt, der die Plastifizierungskammer (10) und die Einspritzkammer (20) miteinander verbindet, welches umfasst:

ein Zumessverfahren, in dem die Harzmasse, die in der Plastifizierungskammer (10) plastifiziert wurde, durch den Verbindungskanal (11) in die Einspritzkammer (20) zugeführt und bewirkt wird, dass sich der Kolben (22) in eine Zumessreferenzposition (S) zurückbewegt, wodurch das Zumessen beendet wird; ein Absperrverfahren, in dem der Verbindungskanal (11) geschlossen wird, und ein Einspritzverfahren, in dem die Befüllungssteuerung auf Basis der Zumessreferenzposition (S) durchgeführt wird;

**dadurch gekennzeichnet, dass** das Zumessverfahren ferner umfasst:

ein Vorverdichtungsverfahren, in dem in der Einspritzkammer (20) das geschmolzene Harz durch die Bewegung des Kolbens (22) nach dem Absperren und vor dem Einspritzen bis zu einem vorgegebenen Druck verdichtet wird, ein Vorverdichtungspositions-Erfassungsverfahren. in dem die Position (Sp) des Kolbens (22) nach dem Vorverdichtungsverfahren erfasst wird, ein Einspritzverfahren, in dem die Befüllungssteuerung auf Basis der Vorverdichtungsposition (Sp) anstelle der Zumessreferenzposition (S) durchgeführt wird, und ein Zumesspositions-Korrekturverfahren, in dem die Zumessreferenzposition (S) als Zumesserfassungsposition (So) in der Weise errechnet wird, dass die nachfolgende Zumessreferenzposition (S) jeweils in dem Formungszyklus um die vorangehende Positionsverschiebung korrigiert wird, die von dem Absperrverfahren und dem Vorverdichtungsverfahren in Bezug auf die letzte Zumesserfassungsposition (So) hervorgerufen wurde, wobei die erste Zumesserfassungsposition (So) der Zumessreferenzposition (S) entspricht.

2. Einspritzverfahren für eine Spritzgussmaschine vom Vorplastifizierungstyp gemäß Anspruch 1, welches umfasst:

ein Absperrpositions-Erfassungsverfahren, das die Position (Sb) des Kolbens (22) nach dem Absperrverfahren erfasst, und
ein Zumessspositions-Korrekturverfahren, in dem die Zumessreferenzposition (S) als Zumesserfassungsposition (So) in der Weise errechnet wird, dass die nächste Zumessreferenzposition (S) in jedem Formungszyklus um die letzte Positionsverschiebung korrigiert wird, die von dem Absperrverfahren in Bezug auf die letzte Zumesserfassungsposition (So) hervorgerufen wurde, wobei die erste Zumesserfassungsposition (So) der Zumessreferenzposition (S) entspricht;
ein Zumessspositions-Korrekturverfahren, bei dem die nächste Zumesserfassungsposition (So) um die Positionsverschiebung korrigiert wird, die durch das Absperren von der Zumesserfassungsposition (So) zur Absperrposition (Sb) hervorgerufen wurde, anstelle des Zumessspositions-Korrekturverfahrens, bei dem die nächste Zumesserfassungsposition (So) um die Positionsverschiebung korrigiert wird, die von der Vorverdichtung verursacht wurde.

3. Einspritzverfahren für eine Spritzgussmaschine vom Vorplastifizierungs-Typ gemäß Anspruch 1 oder 2, welches umfasst:

ein Einspritzverfahren, in dem ein Rücksaugverfahren vor dem Einspritzverfahren hinzugefügt wird, und das Einspritzen aufgrund der Vorverdichtungsposition (Sp) gesteuert wird.

## Revendications

1. Une méthode d'injection pour machine de moulage (1) avec pré-plastification, comportant une chambre de plastification (10) où la matière de résine synthétique est plastifiée, une chambre d'injection (20) dans laquelle cette matière de résine synthétique fondue est mesurée et injectée, un piston plongeur (22) monté dans cette chambre d'injection (20) de façon à se déplacer d'avant et arrière, et un passage (11) reliant la chambre de plastification (10) à la chambre d'injection (20), comprenant:

un procédé de mesurage dans lequel la matière résineuse plastifiée dans la chambre de plastification (10) est présentée à la chambre d'injection (20) par le passage les reliant (11) faisant en sorte que le piston plongeur (22) se déplace en arrière vers une position de référence de mesurage (S), et qu'à ce point le mesurage finit;
un procédé de blocage qui ferme ce passage de connexion (11) et un procédé d'injection dans lequel le contrôle du remplissage est effectué sur la base de cette position de référence de mesurage (S), **caractérisé en ce que** le procédé de mesurage comprend de surcroît:

un procédé de compression préliminaire dans lequel la résine fondue dans la chambre d'injection (20) est comprimée par le piston plongeur (22) jusqu'à une pression prédéterminée, le piston plongeur se déplaçant après le blocage et avant l'injection,
un procédé de détection d'une position de compression préliminaire dans laquelle la position (Sp) du piston plongeur (22) est détectée après ce procédé préliminaire de compression,
un procédé d'injection dans lequel le contrôle de remplissage est effectué sur la base de cette position de compression préliminaire (Sp) au lieu de la position (S) de référence du mesurage; et
un procédé de correction de la position de mesurage dans laquelle la position de mesurage de référence (S) est calculée en tant que position de mesurage de détection (So) de façon à ce que la position de mesurage de référence (S) qui suit dans chaque cycle de moulage soit rectifiée par le mouvement de la position précédente causé par le procédé de blocage et le procédé de compression préliminaire de la dernière position (So) de détection du dernier mesurage; avec le résultat que la première position (So) de détection de mesurage sera égale à la position (S) de référence de mesurage.

2. Une méthode d'injection pour machine de moulage (1) avec pré-plastification selon la revendication 1, comprenant:

un procédé de détection de la position de blocage qui détectera la position (Sb) du piston plongeur (22) après le procédé de blocage, et
un procédé de correction de mesurage de position dans lequel la position (S) de référence de mesurage est calculée en qualité de position de détection de mesurage (So) de telle façon que la position de référence (S) de mesurage suivante sera rectifiée dans chaque cycle de moulage par le dernier mouvement causé par le procédé de blocage depuis la dernière position (So) de détection de mesurage; faisant que la première position (So) de détection de mesurage sera égale à la position (S) de référence de mesurage ;
un procédé de rectification de la position de mesurage qui rectifiera la position de détection de mesurage suivante (So) par le mouvement de la position causé en bloquant de la position (So) de détection de mesurage vers la position de blocage (Sb) au lieu du procédé de rectification de la position de mesurage rectifiant la prochaine position (So) de détection de mesurage par le mouvement de position causé par la compression préliminaire.

3. Une méthode d'injection pour machine de moulage (1) avec pré-plastificatfon selon la revendication 1 ou 2, comprenant:

un procédé d'injection dans lequel un procédé d'aspiration en retour est ajouté avant le procédé d'injection et une injection est contrôlée sur la base de la position de compression préliminaire (Sp).

[Figure 1]

[Figure 2]

S100 — Start

S110 — Die closing, n=0

S120 — Start of plasticization & measurement

S121 — $L \gtreqless S_o$ — No / Yes

S122 — End of plasticization & measurement

S130 — Blocking

S140 — Preliminary compression, detection of $S_p$

S150 — Calculating $(n+1)$th $\bar{S_o}$

S160 — $n = 0$ — No / Yes

S161 — Cooling end? — No / Yes

S170 — Suck-back

S180 — Die opening

S190 — Die closing

S170 — Suck-back

S200 — Injection

S201 — Start of cooling, n=n+1

S202 — $t \gtreqless T$ — No / Yes

S210 — $n < N$ — Yes / No

S220 — Die opening

S240 — End

[Figure 3]

Number of
detection cycles

S

So1    (Sb1)

1st

ΔSp1    Sp1

So2  ΔSp1    (Sb2)

2nd

ΔSp2    Sp2

So3  ΔSp2    (Sb3)

3rd

ΔSp3    Sp3

Son  ΔSpn-1    (Sbn)

nth

ΔSpn    Spn

[Figure 5]

Number of
detection cycles

S

So1    Sb1

1st

ΔSb1    Sp1

So2  ΔSb1    Sb2

2nd

ΔSb2    Sp2

So3  ΔSb2    Sb3

3rd

ΔSb3    Sp3

Son  ΔSbn-1    Sbn

nth

ΔSbn    Spn

13

[Figure 4]

S100 — ( Start )

S110 — Die closing, n=0

S120 — Start of plasticization & measurement

S121 — $L \geqq S o$ — No

Yes

S122 — End of plasticization & measurement

S130 a — Blocking, detection of Sb

S140 — Preliminary compression, detection of Sp

S150 a — Calculating (n+1)th So

S160 — $n = 0$ — No

Yes

S161 — Cooling end? — No

Yes

S170 — Suck-back

S170 — Suck-back

S180 — Die opening

S190 — Die closing

S200 — Injection

S201 — Start of cooling, n=n +1

S202 — $t \geqq T$ — No

Yes

S210 — $n < N$ — Yes

No

S220 — Die opening

S240 — ( End )